# EUROPEAN PATENT APPLICATION

(11) **EP 4 576 667 A1**
(43) Date of publication of application: **25.06.2025**
(21) Application number: 23307237.0
(22) Date of filing: 18.12.2023
(51) Int. Cl.: H04L 9/40, H04W 12/108, H04W 12/48, H04W 12/069

(54) **SYSTEM AND METHOD TO BRING AUTHENTICITY IN THE COMMUNICATION BETWEEN MOBILE CLIENT AND SERVER**

(71) Applicant: THALES DIS FRANCE SAS, 92190 Meudon (FR)
(72) Inventor: SKRIPAL, Petr, 250 68 Rei (CZ); PANDIAN, Gautam Arvind, 670166 Singapore (SG)
(74) Representative: Grevin, Emmanuel

(57) **Abstract**

A system (100) and method (800) for verifying the authenticity of communication between a mobile client (102) and a server (106) includes creating (802) a self-signed application binding certificate (104), establishing (804) a secure channel to communicate the application binding certificate with an application binding service (302), validating (806) the application binding certificate by the application binding service to register a public key at the server, setting (807) a validity and expiration for the application binding service, and sending (808) validation of the binding to the client. The system and method after successful binding, can sign (810) all sensitive requests at an HTTP level by the application binding private key that is verified by the application binding service ensuring the request's origin from a rightful mobile application and return (812) a verification status and application binding public key Id by the application binding service to a Backend Service (312).

## Description

### TECHNICAL FIELD

The present embodiments relate generally to systems and methods of communication between a mobile client device and a server. More particularly, the system and method relate to bringing authenticity in the communication between the mobile client and the server.

### BACKGROUND

In all the communication between mobile client and server, one of the biggest bottlenecks is the lack of server's validation of the mobile client's request authenticity. As an example, this missing security control may allow adversaries to set up fake clients (e.g., emulator or PC applications) acting as a legitimate mobile client to further establish communication with server endpoints. With the growing number of mobile malware, there is a possibility that an adversary may intercept a communication channel between a legitimate client and server in order to steal sensitive data to use it on an adversaries' client. These attacks may for example lead to the loss of sensitive data and confidentiality breach.

One attempted solution can involve signing HTTP Messages when communicating over the Internet using the HTTP protocol so that a server or client can authenticate the sender of a particular message and ensure that the message was not tampered with during transit. Although signing HTTP Messages provides a way for servers and clients to simultaneously add authentication and message integrity to HTTP messages by using a digital signature, such technique does not account for any controls on integrity and authenticity of the client to be verified by the server.

Another attempted solution involves the OAuth 2.0 Demonstrating Proof-of-Possession at the Application Layer (DPoP) where the system uses a mechanism for sender-constraining OAuth 2.0 tokens via a proof-of-possession mechanism on the application level. This mechanism allows for the detection of replay attacks with access and refresh tokens. DPoP focusses mainly on protecting the authenticity of OAuth tokens. It does not address use cases other than OAuth and also does not address authenticity of the HTTP request body and headers

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a system or method herein will use an **Application Binding Protocol** (ABP) to bring authenticity in the communication between a mobile client and a server. The systems and methods are preferably agnostic to business use cases or communication flows. In some embodiments, the system or method requires a "bootstrap phase" that expects a secure channel to be established as well as a "signing phase" as will be further detailed below in the detail description.

In some embodiments, a system for verifying the authenticity of communication between a mobile client and a server includes one or more processors (204) and memory (202) operatively coupled to the one or more processors, where the memory includes computer instructions which when executed by the one or more processors causes the one or more processors to perform certain operations. The operations can include creating a self-signed application binding certificate, establishing a secure channel to communicate the application binding certificate with an application binding service, validating the application binding certificate by the application binding service to register a public key at the server, setting a validity and expiration for the application binding service, and sending validation of the binding to the client, where the client performs a renewal of the application binding once the application binding validity expires. In some embodiments after successful binding, the system can sign all sensitive requests at an HTTP level by the Application binding private key that is verified by the Application binding service ensuring the request's origin from a rightful mobile application and the system can return a verification status and Application binding public key Id by the Application binding service to the backend service.

In some embodiments, the system validates the application binding service for the challenge, the application measurements, and the device environment measurement to register the public key at the server.

In some embodiments, the system sets the validity and expiration for the application binding service for application binding keys that limits the re-usage of the same application binding public key to validate request from the client after its expiration.

In some embodiments, the system further requires renewal of the application binding keys after expiration.

In some embodiments, the system further associates any access tokens by the backend service with the Application binding public key Id. In some embodiments, the system associates any access tokens by having an additional field containing a public key id in the access tokens. In yet other embodiments, the system associates any access tokens by persisting the Application binding public key Id in a storage that additionally links the application binding channel with any applicative level authentication/authorization tokens.

In some embodiments, a system for verifying the authenticity of communication between a mobile client and a server can include one or more processors and memory operatively coupled to the one or more processors, where the memory includes computer instructions which when executed by the one or more processors causes the performance of certain operations. In some embodiments, the operations can include creating a self-signed application binding certificate including a challenge from the server, application measurements, and device environment measurements, establishing a secure channel to communicate the application binding certificate with an application binding service, validating the application binding certificate by the application binding service for the challenge, the application measurements, and the device environment measurement to register a public key at the server, setting a validity and expiration for the application binding service for application binding keys that limits the re-usage of the same application binding (public) key to validate request from the client after its expiration, and sending validation of the binding to the client, where the client performs a renewal of the application binding once the application binding validity expires. In some embodiments after successful binding, the operations further include signing all sensitive requests at an HTTP level by the Application binding private key that is verified by the Application binding service ensuring the request's origin from a rightful mobile application and returning a verification status and Application (or App) binding public key Id by the Application binding service to the backend service.

In some embodiments, the system is further configured to require renewal of the application biding keys after expiration.

In some embodiments, a method for verifying the authenticity of communication between a mobile client and a server in a computing environment can include the steps of creating a self-signed application binding certificate, establishing a secure channel to communicate the application binding certificate with an application binding service, validating the application binding certificate by the application binding service to register a public key at the server, and setting a validity and expiration for the application binding service, sending validation of the binding to the client, where the client performs a renewal of the application binding once the application binding validity expires. In some embodiments after successful binding, the method further includes signing all sensitive requests at an HTTP level by the Application binding private key that is verified by the Application binding service ensuring the request's origin from a rightful mobile application and returning a verification status and Application binding public key Id by the Application binding service to the backend service.

In some embodiments, the method validates the application binding service for the challenge, the application measurements, and the device environment measurement to register the public key at the server.

In some embodiments, the method sets the validity and expiration for the application binding service for application binding keys that limits the re-usage of the same application binding public key to validate request from the client after its expiration.

In some embodiments, the method further associates any access tokens by the Backend Service with the Application binding public key Id.

In some embodiments, the method associates any access tokens by having an additional field containing a public key id in the access tokens or by persisting the Application binding public key Id in a storage that additionally links the application binding channel with any applicative level authentication/authorization tokens.

### BRIEF DESCRIPTION OF THE DRAWINGS

The accompanying drawings, which are incorporated in and constitute a part of this description, illustrate embodiments consistent with the embodiments and, together with the description, serve to explain the principles of the embodiments.
**FIG. 1** illustrates a block diagram and flow of an application binding protocol system in accordance with the embodiments;
**FIG. 2** illustrates another block diagram and flow of a system for a use case example for the application binding protocol system in accordance with the embodiments;
**FIG. 3A-3C** illustrate a first portion of a sequence flow diagram of an application binding protocol in accordance with the embodiments; and
**FIGs. 4A-4B** illustrate a second portion of the sequence flow diagram of an application binding protocol in accordance with the embodiments;
**FIG. 5** is a sequence diagram for obtaining a secure channel in accordance with the embodiments;
**FIG. 6** is an illustration showing a self-Signed application binding certificate in accordance with the embodiments;
**FIG. 7** is an illustration showing a certificate chain in accordance with the embodiments; and
**FIG. 8** is flow chart illustrating a method of application binding in accordance with the embodiments.

Specific embodiments have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments. Instead, they are merely examples of systems, apparatuses and methods consistent with aspects related to the embodiments as recited in the appended claims.

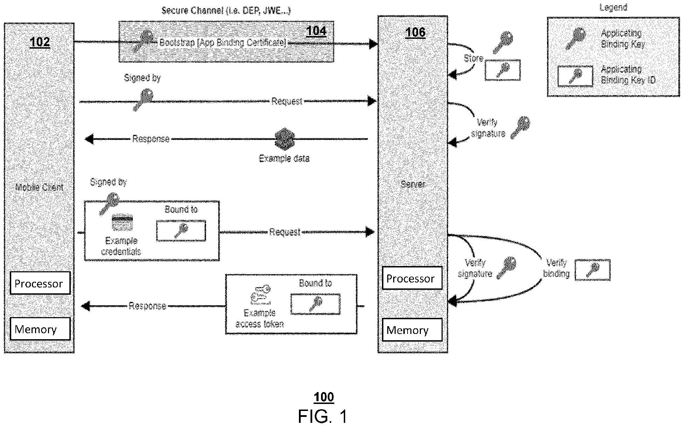

In some embodiments with reference to the system 100 of FIG. 1, the systems and methods herein provide for a way for server end points (106) to verify a request origin against the intended and rightful mobile application. More particularly, they can resolve a number of typical problems encountered in various mobile products and functionalities including some of these problems:
**App:** An App typically refers to a mobile application on a mobile device although the embodiments are not necessarily limited to mobile applications and may be applicable more broadly to applications operating on any computing device.
**Provisioning an OTP seed:** A user initiates enrollment by providing one time registration code to provision the OTP seed. In this case, the server has no way to know the origin of the request, thereby potentially giving away the OTP seed to an adversary using a fake mobile client requesting on behalf of the user.
**FIDO Registration:** FIDO (Fast Identity Online) protocol requires a public key enrollment process, wherein a legitimate mobile App generates a public-private key pair and shares the public key with the server. The FIDO server has no way to know whether the request originates from an authentic mobile application. In the worst case, the adversary may generate a key pair on an emulator or on a desktop and register the public key with the FIDO Server on behalf of a legitimate user.
**OAuth Flows:** A mobile client which performs OAuth (Open Authentication) flow with the server gets the bearer tokens such as access tokens /refresh tokens from a server. From then on, for any resource access, the client uses the access token. Access tokens can be stolen and used by a fake App to get unauthorized access to the resource on behalf of a legitimate user.
**Digital wallet flows:** A mobile payment wallet sends replenishment request to a server via Transport Layer Security (TLS). The Server has no standard way to validate that the request originates from a legitimate mobile payment wallet application, furthermore it cannot evaluate whether the mobile device executes in a safe state.

With respect to the OAuth (Open Authentication) flow cases noted above, there is a free access to the resource server to whosoever holds valid bearer tokens. There is currently no standard way to cryptographically verify the authenticity of client requests on the server side.

Before providing further the details of the embodiments, a glossary of key terms or abbreviations for certain embodimentsfollows for reference:
- **App Signing Key:** Application signing key

- **Transit Certificate/Public Key:** Asymmetrical keypair used to establish initial trust as a part of cryptographical exchange within Secure Channel
- **Transit Certificate Chain:** Chain of trusted certificates in one bundle including Transit Certificate
- **App Binding Keypair:** Binding protocol signing keys
- **App Binding Certificate:** The certificate that contains App Binding Public Key and dedicated ASN1 structure in the form of certificate extension
- **App Binding Public Key Id:** Hash of the App Binding Public Key
- **Server** : General term for the entire solution that consists of Backend Service and App
- **Backend Service:** Any backend service that uses App Binding protocol Binding Service
- **App** / **Mobile App:** A client application that houses the application binding client that performs the application binding protocol (in some embodiments, the application binding client can be an SDK)

More particularly, some of the embodiments provide solutions to these particular problems:
**Problem 1: Mobile App Authenticity, meaning** the absence of a client's app genuine origin validation. The solution, in some embodiments, involves measurements based-verification of a client's certificate and establishment of a public/private keypair based App Binding channel between the client and the server based on the App Binding Protocol.
**Problem 2: The lack of Hardware (HW)-attestation support for all mobile** devices and more particularly the absence of HW-backed attestation (based on Android/iOS standards) of mobile app and device measurements. The solution, in some embodiments, involves the creation of software (SW)-based attestation with SW-based measurements.
**Problem 3: Mobile App's request authenticity** which means the absence of a client's request origin validation. The solution, in some embodiments, involves an App Binding Channel that includes backend service validation of mobile client's requests signed by an App Binding Key.
**Problem 4: The lack of binding a server's access tokens with a Mobile App** which can mean the absence of a mobile app's binding information inside server-size access tokens (i.e., JWT or JSON Web Tokens). The solution in some embodiments involves the injection of a client's certificate reference (App Binding Public Key ID) into access tokens once the binding channel Is established.

In this context, what is the **App Binding Protocol** (ABP)? The ABP is a method to bring authenticity in the communication between the mobile client and server. The system is preferably agnostic to business use cases or communication flows. In some embodiments, the system requires a "bootstrap phase" that expects a Secure Channel to be established.

A signature-based protocol involves asymmetrical cryptography, "attestation" capabilities of hardware (HW)-driven generation of keypairs on the mobile client side, "self attestation" properties of software (sw)-driven RASP (Runtime Application Self-Protection) evaluation, Binding between "client" and "server" in the form of "App Binding Public Key", and re-usage of App Binding Keys for further App request signing and verification.

With further reference to the high level diagram of system 100 of FIG. 1, a server 106 and mobile client 102 can establish a secure channel.

In a Bootstrap phase requiring the establishment of a secure channel, an App Binding Certificate 104 is sent from the mobile client 102 to the server 106. For example, the secure channel can be established using an end-to-end secure channel. The client and server can communicate an App Binding Key Certificate (in the form of Attestation) between them under a Secure Channel. The App Binding Private Key (PrivKey) remains on client 102 while the App Binding Public Key (PubKey) remains on server 106 (Application Binding Service or App Binding Service, 302)
During a Signing phase, the Client 102 signs http request with the PrivKey (header + body) and the Server 106 validates http request authenticity and integrity with the PubKey. The Server 106 binds any generated/expected access tokens (for example, apikey, pwd, JWT...) to the PubKeylD.

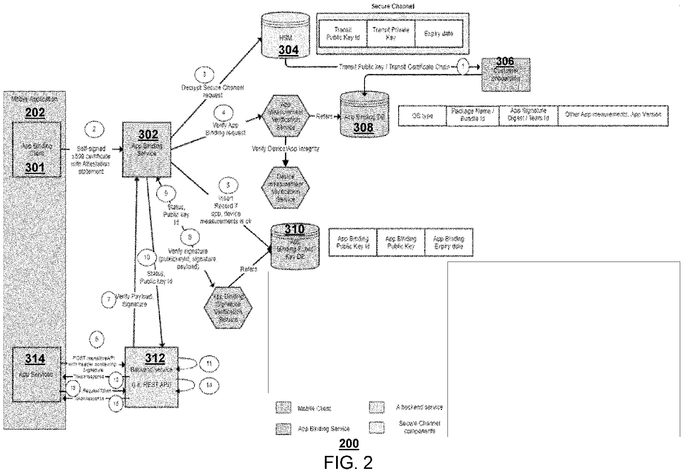

With further reference to a system 200 in FIG. 2, customer (206) onboarding (or issuer onboarding) can include storage of app identification of various forms (i.e., SHA2 of app package name etc.). On the client side, RASP and device measurements can be part of Attestation. Furthermore, proof of authentic request can be bound to the expected customer application.

In a server phase, proof of authentic authentication/authorization access) credentials are linked to the bound app. Furthermore, integrity protection of the client can flow at the http level. More specifically, FIG. 2 illustrates an application binding protocol flow use case where an app 202 at a mobile device 102 uses an app binding certificate 104 to bind the app 202 to the server 106 via an application or app binding service 302 via a server API 208 where an application stores app identification information previously.

The embodiments aim to establish authenticity in all sensitive communications between a mobile client and a server. The following are the detailed elements and steps to achieve it in a particular embodiment with reference to the system diagram and flow chart 200 of FIG. 2. The system 200 includes a mobile application 202 having an app binding client 301 and app services 314. The App Binding client 301 can establish a secure channel and communicate with a customer (or issuer) 306 via a hardware secure module (HSM) 304 and an app binding service 302. The App Binding client 301 also communicates with a backend service 312 via the App Binding Service 302. The App services 314 also communicate with the backend services 312. The App Binding Service 302 utilizes an App Binding database 308 and an App Binding Public Key database 310 to establish and authenticate or verify certain information as further detailed below.

The process begins with an App binding Bootstrap process where Customer Onboarding 306 populates app measurements and a hardware security module 304 provides transit public key or transit certificate chain to the customer (306) during the customer onboarding at **Step 1.** The customer onboarding step includes an App registration step where the customer provides any of the following
a. The website link where they have hosted the Android and iOS application package names and App signatures ( https://<example.com>/.well-known/assetlinks.json )
b. Application Package name and SHA256 of App Singing Certificate for Android, Bundle Id and Team Id for iOS
c. SHA256 of different App artifacts (for example, dex file, .so, .dylib, any resource files etc ) and the corresponding version.

In some embodiments, a secure channel step can involve the app biding client 301 sending a generated X509 certificate with attestation statement in a secure channel at **Step 2.**

The App Binding Service component 302 a) generates a Transit Key pair where b) the customer 306 is given a public key of the Transit Key Pair (Transit Public Key) not limited to the following: i. RSA/EC Public key (or) ii. X509 Certificate chain leading to a trusted CA or Custom CA generated by App Binding Service and the App binding service c) Securely stores the Transit Private Key corresponding to the Transit Public Key issued for each customer and d). Securely stores the Application Package name and SHA256 of App Singing Certificate for Android, Bundle Id and Team Id for iOS (or) the server url to check for App package verification in a database. The Transit Public Key is either embedded in the mobile Application before publishing it to an App Store or fetched dynamically from the customer server at runtime. The Transit Public Key is used to establish Secure Channel.

So, the Application Binding Service or App Binding Service 302 decrypts the secure channel request using the private key stored in the HSM 304 at **step 3.** At **step 4,** the App Binding Service 302 validates the app measurement and device measurement. At **step 5,** the App binding service stores the App binding public key along with the public key ID in an App Binding Public key database 310 and sets an expiry date for the binding.

In some embodiments, the App Binding bootstrap flow can include the following steps:
1. The mobile Application 202 initiates the App Binding bootstrap flow by passing the Transit Public Key or Transit Certificate chain
2. App Binding Service 302 validates :
   a. Transit Public Key's certificate chain of trust
   b. Validity of all the certificates
   c. Match of the root certificate with the expected Root certificate SPKI hash
3. App Binding Service 302 establishes Secure channel with the App Binding Service by using Transit Keys. It is assumed that the Secure channel is used for all further steps within the App Binding bootstrap phase atop of TLS.
4. App Binding Services 302 generates a random challenge.
5. App Binding Service 302 receives the App Binding Service's challenge from the payload.
6. App Binding Service 302 checks the secure hardware module 304 (Android keystore or iOS Secure Enclave) if the App Binding Key pair is already generated or not under the name of predefined alias. If not it generates the App Binding Key pair in the secure hardware module (Android Keystore or iOS Secure Enclave) with the predefined alias.
7. App Binding Service 302 computes the App measurements not limited to the following:
   a. App package name
   b. SHA256 of App signing public key (aka App Signature)
   c. SHA256 of all application or App artifacts (including, but not limited to any combination of, dex file, .so, .dylib, any resource files etc )
8. App Binding Service 302 computes device environment measurements not limited to the following:
   a. Checks for presence of root/jailbreak artifacts on the device
   b. Checks for presence of hooking frameworks ( Xposed, Frida, Cydia, etc ) on the device
   c. Checks for presence of hooking artifacts in the process memory
   d. Checks Device is an emulator or not
   e. Checks for any debugger attached or not
   f. Checks for any tampering of binary in memory
   g. Checks if bootloader is unlocked
9. The device environment measurement is filled in a byte array. The byte array can be obfuscated in a table.
10. App Binding Service generates a X509 App Binding Certificate that contains the App Binding Public Key and ASN1 structure containing a custom extension. The custom extension is filled with the challenge received from the server, App measurements and device environment measurements. The certificate is then self-signed by the App Binding private key (generated in the secure hardware in Step 6 above).
11. The App Binding Certificate is sent to the App Binding Service
12. The App Binding Service retrieves the App Binding Certificate from the client's payload, parses it and fetches the ASN1 structure to check the following:
   a. Challenge sent by the client matches the challenge generated by the App Binding Service for the client
   b. Time between challenge generation and retrieval of the challenge is not greater than a duration configured during onboarding
   c. App measurements match the measurements stored in the App Binding Service database
   d. Validity of no compromise indicators on the device environment measurements such as jailbreak/root, hooking etc.
13. Once the App Binding Service validates the App Binding Certificate it stores the App Binding Public Key with the Identifier in the form of SHA256 of the App Binding Public Key.
14. The App Binding Service sends the response indicating SUCCESS or reason for FAILURE:
   a. The App Binding Client upon receiving the server response as SUCCESS indicates the App that the App Binding is successful.
   b. If the response indicate FAILURE, then the App Binding Client securely deletes the App Binding Key pair generated in hardware and reports the error status to the App.

In some embodiments, the App binding signature verification process with reference again to FIG. 2 with the mobile application 202 via the app services 314 sending a sensitive request's payload signed by the App Binding private key at **step 6.** Before processing the request, the backend service 312 at **step 7** delegates the signature verification to the app binding service 302. At **step 8,** the app binding signature verification service validates the signature using the already registered binding public key. At **step 9,** the app binding signature verification service returns the verification status and Public key ID used in the verification process. At **step 10,** the App binding signature verification service returns the verification status and Public key ID used in the signature verification to the Backend service 312 in response to step 7. At **step 11,** the backend service 312 generates a token bound to the App Binding public key ID. At **step 12,** the Backend Service 312 responds to the client (102) with a response containing a token. The mobile app 202 at **step 13** then sends a sensitive request with payload signed by the App binding private key. The flow from steps 7 through 10 is then repeated.

At **step 14,** the backend service 312 validates the App binding public key ID in the token with the public key ID provided by the App binding service 302, and if it matches, generates a successful response. At **step 15,** the backend service 312 responds to the mobile device (102) with the result.

In some embodiments, binding the App Binding Public Key ID with Credentials and Verifying the authenticity can involve the following steps:
1. For every communication with the Backend Service 312, the mobile client 102 generates a payload and invokes the App Binding Service 302 to sign the hash of the HTTP headers+payload with the App Binding Private key. The corresponding App Binding Public Key Id and the signature is included in the HTTP header.
2. The Backend Service 312 upon receiving the request, delegates the verification of the signature to the App Binding Service 302.
3. The App Binding Service 302 verifies the signature using the public key identified by public key id in the signature and returns back the verification status and public key id used in the verification process
4. For the first request, the Backend Service 312 uses one of the methods below to bind the App Binding Public Key Id with the issuing identity (i.e., user or applnstance):
   a. For signature-based tokens such as JWT/JWS, it is recommended that Backend Service 312 generates the token with the App Binding Public Key Id as a part of the token's payload
   b. For non-signature-based tokens such as API key, or passwords, it is recommended that the Backend Service 312 links the generated tokens with the App Binding Public Key Id and persists the link.
5. For subsequent requests, the Backend Service 312 verifies the request by one of the mechanisms:
   a. For signature-based tokens (JWT/JWS): Backend Service 312 checks if the App Binding Public Key Id included in the token matches the App Binding Public Key given by App Binding Service 302.
   b. For non-signature-based requests containing any authentication/authorization tokens: Backend Service 312 verifies if the App Binding Public Key Id returned by the App Binding Service 302 during the verification matches persisted App Binding Public Key Id stored by Backend Service 312.
6. Once the request is verified by the Backend Service 312, it continues to process the request further.

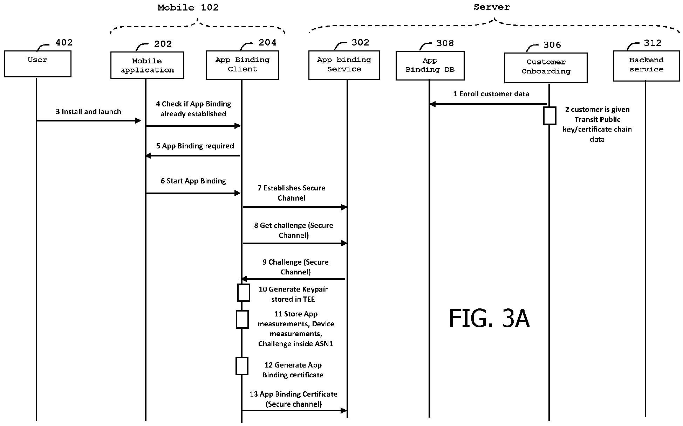

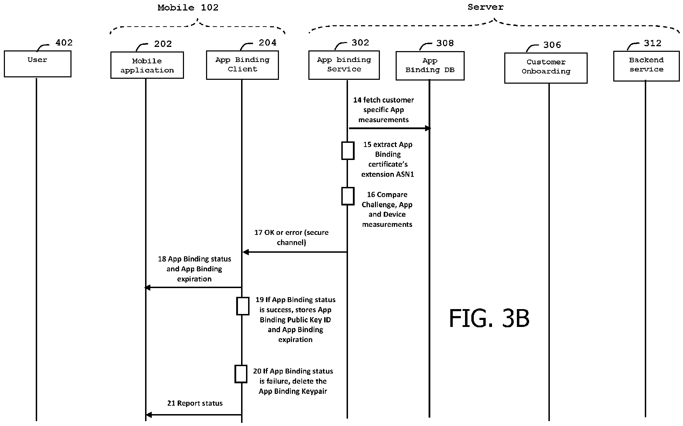

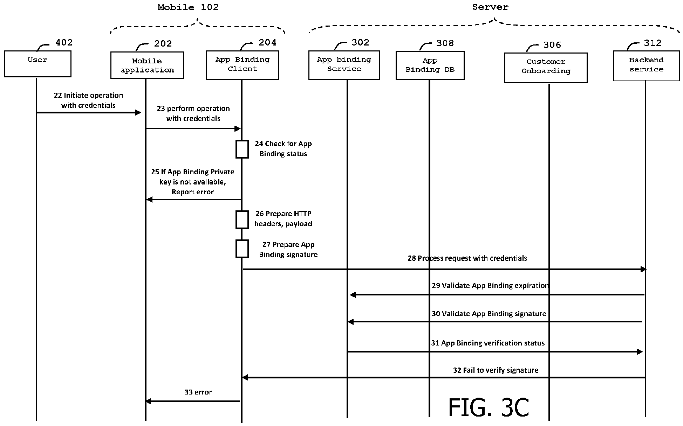

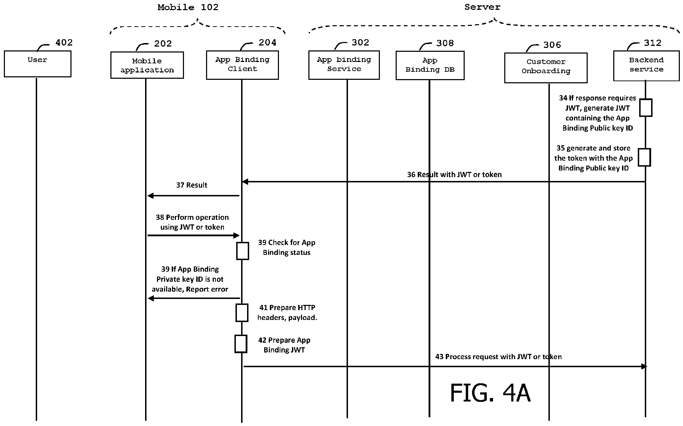

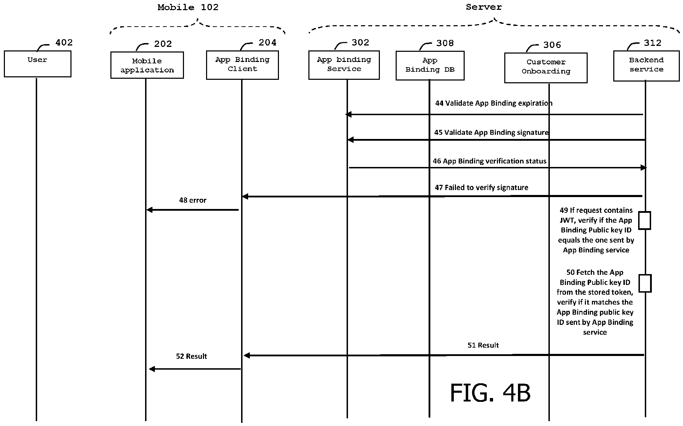

Referring to FIGs. 3A, 3B, 3C, 4A and 4B, a sequence flow diagram illustrates an application binding protocol 400 in accordance with the embodiments. FIG. 3A illustrates steps 1-13, FIG. 3B illustrates steps 14-21, FIG. 3C illustrates steps 22-33, FIG. 4A illustrates steps 34-43 and FIG. 4B illustrates steps 44-52. The flow begins at **step 1** by enrolling customer data (issuerid, PackageName, App Signature Digest/Teamid, App Measurements, App Version, etc.) with the App Binding database 308 using the customer onboarding 306. At step 2, the customer is given the transit public key or certificate chain. After the enrollment, the user 402 can install and launch the App binding bootstrap (App Binding Certificate) at the mobile device 102 via the mobile application 202 at **step 3.** At **step 4,** the mobile application 202 checks with the App Binding Client 204 to see if the App Binding is already established. At **step 5,** the App Binding Client 204 may respond back to the Mobile Application 202 by noting that the App Binding is required.

The protocol 400 then starts the app binding at **step 6** at the App Binding Client 204 with the Transit Public key or Certificate chain. The App binding Client 204 establishes the secure channel with the App Binding Service 302 at **step 7** using the Transit Public Key or Certificate Chain. At **step 8,** the App Binding Client 204 can get a challenge over the secure channel from the App Binding Service 302 and at **step 9,** the App Binding Client can receive the Challenge over the secure channel from the App Binding Service. The App Binding Client 204 can then further generate a keypair (kpriv, kpub) that is stored in a Trusted Execution Environment (TEE) and used as an App Binding Keypair at **step 10.** At **step 11,** the App Binding Client 204 can store App measurements, Device measurements, and the challenge inside a data structure such as an ASN.1 module. At **step 12,** the App Binding Client 204 can generate an App Binding Certificate (kpriv, ASN1: certificate extension) that is sent to the App Binding Service 302 over a secure channel in **step 13.**

At **step 14,** the App binding Service 302 can then fetch customer specific App measurements from the App Binding Database 308 and the App Binding Service 302 can extract the App Binding Certificate's extension ASN1 at **step 15.** At **step 16,** the App Binding Service 302 can compare the Challenge, the App Measurements, the Device Measurements with the fetched Challenge, App Measurements (such as Package name, App signature digest), and Device Measurements. As a result of the comparison in step 16, the App Binding Service 302 at **step 17** will send to the App Binding Client 203 over a secure channel that the comparison is ok or that there was an error or invalid measurements. At **step 18,** the App Binding Client 204 sends to the Mobile Application 202 the App Binding status and App Binding expiration. **At step 19** if the App Binding status is a success, the App Binding Client 204 will store the App Binding Public Key ID and the App Binding expiration. Alternatively at **step 20,** if the App Binding status is a failure, then the App Binding Client 204 deletes the App Binding keypair. At **step 21,** the App Binding Client 204 reports the status to the Mobile Application 202.

At step 22, the user can initiate an operation at the mobile application 202 with credentials and the mobile application correspondingly performs the operation with the app binding client 204 at **step 23.** At **step 24,** the App Binding Client 204 checks for the App Binding Status (for the presence of the App Binding Private key). Alternatively at **step 25** if the App Binding Private key is not available, the App Binding Client 204 will report an error to the mobile application 202. At **step 26,** the App Binding Client 204 can prepare HTTP Headers and a payload. At **step 27,** the App Binding Client 204 can further prepare the App Binding signature (sign (kpriv, header)) and place the signature in the HTTP Header. The App Binding Client 204 can then send a process request with credential to the Backend Service 312 at **step 28.** At **step 29,** the Backend Service 312 can validate the App Binding expiration with the App Binding Service 302 and at **step 30** further validate the App Binding signature (payload, signature) with the App Binding Service 302. At **step 31,** the App Binding Service 302 can send the App Binding verification status and the App Binding Public key ID use in signature verification back to the Backend Service 312.

In one alternative if the status is a fail, the backend service 312 sends information to the App Binding Client 204 at **step 32** that the backend service 312 failed to verify the signature and the App Binding Client in turn sends an error message at **step 33** to the mobile application 202.

In some embodiments with further reference to FIG. 4B, at **step 34,** if the response requires JWT or JWS, the backend service 312 generates the JWT or JWS containing the App Binding Public Key ID. If the response does not require JWT or JWS, then the backend service 312 at **step 35** generates and stores the token with the App Binding Public ID. At **step 36,** then the Backend Service 312 sends the result with the JWT/JWS or token to the App Binding Client 204 and the App Binding Client 204 sends the result to the Mobile Application 202 at **step 37.**

Steps 38-52 further involve verifying the authenticity and the link with the App Binding Public Key ID. For example, at **step 38,** the mobile application 202 can initiate an operation using JWT/JWS or a token by informing App Binding Client 204. At **step 39,** the App Binding Client 204 checks for the App Binding Status (for the presence of the App Binding Private Key). If the App Binding Private key is not available, then the App Binding Client 204 reports an error to the Mobile Application 202 at **step 40.**

At **step 41,** the App Binding Client 204 can prepare HTTP Headers and a payload. At **step 42,** the App Binding Client 204 can further prepare the App Binding JWT (sign (kpriv, header+payload)) and place the signature in the HTTP Header. The App Binding Client 204 can then send a process request with JWT/JWS or token to the Backend Service 312 at **step** 43. At **step 44** (by reference to FIG. 4B), the Backend Service 312 can validate the App Binding expiration with the App Binding Service 302 and at **step 45** further validate the App Binding signature (payload, signature) with the App Binding Service 302. At **step 46,** the App Binding Service 302 can send the App Binding verification status and the App Binding Public key ID used in signature verification back to the Backend Service 312.

In one alternative if the status is a fail, the backend service 312 sends information to the App Binding Client 204 at **step 47** that the backend service 312 failed to verify the signature and the App Binding Client in turn sends an error message at **step 48** to the mobile application 202.

In some embodiments, at **step 49,** if the request contains JWT or JWS, the backend service 312 verifies that the App Binding Public Key ID equals the one sent by the App Binding Service 302. If the response does not require JWT or JWS, then the backend service 312 at **step 50** can fetch the App Binding Public ID from the stored token and verify if it matches the App Binding Public key ID send by the App Binding Service 302. At **step 51,** the Backend Service 312 sends the result to the App Binding Client 204 and the App Binding Client 204 sends the result to the Mobile Application 202 at **step 52.**

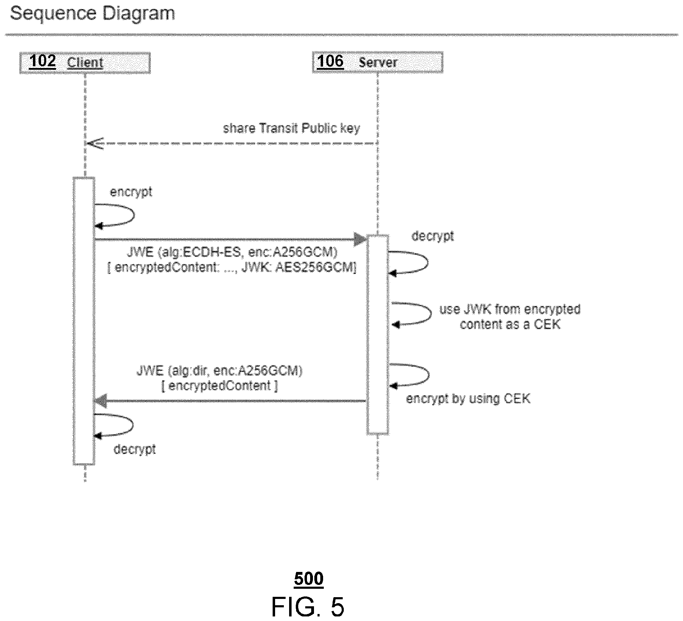

**FIG. 5** depicts a sequence diagram 500 for obtaining a secure channel between a client 102 and server 106 using JWE in accordance with some of the embodiments. The server 106 can share a Transit Public key enabling the client 102 and server 106 to respectively encrypt and decrypt content as shown.

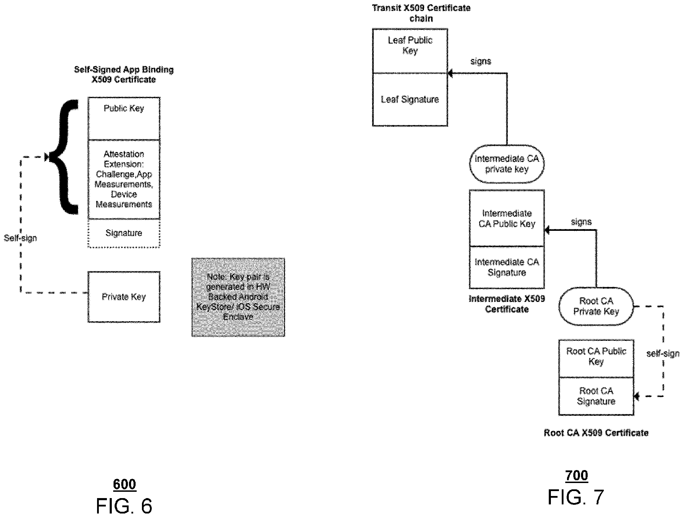

**FIG. 6** is an illustration showing a self-Signed application biding certificate 600 in accordance with the embodiments. The Certificate can include a public key, an attestation extension having a Challenge, App Measurement, and Device Measurements and a self-signed signature that can use a private key. Note that a key pair can be generated in hardware backed Android KeyStore or iOS Secure Enclose as examples.

**FIG. 7** is an illustration showing a certificate chain 700 in accordance with the embodiments that includes a Root CA X509 Certificate and an Intermediate X509 Certificate signed or self-signed as shown.

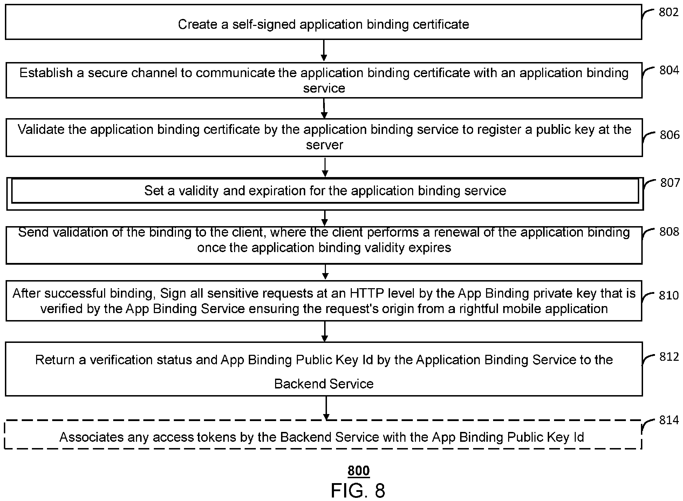

In some embodiments with reference to the flow chart of FIG. 8, a method 800 for verifying the authenticity of communication between a mobile client (102) and a server (106) in a computing environment can include the step 802 of creating a self-signed application binding certificate, establishing at 804 a secure channel to communicate the application binding certificate with an application binding service, validating at 806 the application binding certificate by the application binding service to register a public key at the server, and setting a validity and expiration for the application binding service at 807. The method 800 can further include the step 808 of sending validation of the binding to the client, where the client performs a renewal of the application binding once the application binding validity expires. In some embodiments after successful binding, the method 800 further includes signing at step 810 all sensitive requests at an HTTP level by the App Binding private key that is verified by the App Binding Service ensuring the request's origin from a rightful mobile application and returning at step 812 a verification status and App Binding Public Key Id by the Application Binding Service to the Backend Service.

In some embodiments, the method 800 in the flow chart of FIG. 8 validates the application binding service for the challenge, the application measurements, and the device environment measurement to register the public key at the server. Note that application measurements can include any number of measurements including, but not limited to application package name, application signature, Team Identifier, Bundle Identificer or any combination thereof. Further note that device environment measurements can include any number of measurements, including, but not limited to a device having (characteristics or parameters that are) rooted, presence of hooking frameworks, presence of debugger, or any combination thereof.

In some embodiments, the method 800 in the flow chart of FIG. 8 sets the validity and expiration for the application binding service for application binding keys that limits the re-usage of the same application binding public key to validate request from the client after its expiration.

In some embodiments, the method 800 at step 814 further associates any access tokens by the Backend Service with the App Binding Public Key Id.

In some embodiments, the method 800 associates any access tokens by having an additional field containing a public key id in the access tokens or by persisting the App Binding Public Key Id in a storage that additionally links the application binding channel with any applicative level authentication/authorization tokens.

The embodiments herein provide certain advantages. Notably, some embodiments provide verifiable authenticity of a client's communication with a server (Backend service). The bootstrap between the client and server can be secured using application hardening and applicative encryption (Secure Channel) done on top of the transport encryption - TLS. With the pre-populated information such as application measurements stored at the server, it is possible to verify all the application measurements sent by the client. With the device measurements, the server is able to validate validity of a secure environment during application binding preparation. Here are additional examples of advantages within various business scenarios in accordance with the embodiments:
1. In FIDO use cases, the App Binding mechanism provides the authenticity of the FIDO public key being enrolled at the server.
2. In OATH use cases, the App Binding mechanism provides that authenticity of the OTP seed/secret provisioning to a legitimate mobile application running on safe device environment.
3. In OAuth use cases, the App Binding mechanism adds authenticity of access tokens, refresh tokens and authorization tokens exchanges, thereby rendering the stolen tokens useless.
4. In Payment use cases, App Binding mechanism ensures that payment keys are provisioned to a legitimate mobile application running on a safe device environment.
5. In other general use cases, the App Binding mechanism adds authenticity of a client requests at http level. Once the authenticity is verified the mobile client may further receive other assets such as sensitive policies, encryption public keys or enforce certificate pins for further TLS connection with other servers.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. For example, although the primary focus of the embodiments are directed to mobile applications or "Apps", the scope of the embodiments certainly encompass the same techniques in more generic applications that are not necessarily in the context of a mobile. Combinations of the above embodiments, and other embodiments not specifically described herein, will be apparent to those of skill in the art upon reviewing the above description.

## Claims

1. A system (100,200) for verifying the authenticity of communication between a client (102) and a server (106), comprising:
one or more processors and memory operatively coupled to the one or more processors, wherein the memory includes computer instructions which when executed by the one or more processors causes the one or more processors to perform the operations of:
creating (802) a self-signed application binding certificate (104);
establishing (804) a secure channel to communicate the application binding certificate with an application binding service (302);
validating (806) the application binding certificate by the application binding service to register a public key at the server;
setting (807) a validity and expiration for the application binding service;
sending (808) validation of the binding to the client, where the client performs a renewal of the application binding once the application binding validity expires;
after successful binding, signing (810) all sensitive requests at an HTTP level by the App Binding private key that is verified by the application binding service ensuring the request's origin from a rightful mobile application; and
returning (812) a verification status and application binding public key Id by the application binding service to a Backend Service (312).

2. The system of claim 1, wherein the self-signed application binding certificate includes a self-signed application binding X509 certificate.

3. The system of claim 2, wherein the system validates the application binding service for the challenge, the application measurements, and the device environment measurement to register the public key at the server.

4. The system of claim 1, wherein the system sets the validity and expiration for the application binding service for application binding keys that limits the re-usage of the same application binding public key to validate request from the client after its expiration.

5. The system of claim 1, wherein the system further requires renewal of the application biding keys after expiration.

6. The system of claim 1, wherein the system further associates (814) any access tokens by the Backend Service with the application binding public key Id.

7. The system of claim 6, wherein the system associates any access tokens by having an additional field containing a public key id in the access tokens.

8. The system of claim 6, wherein the system associates any access tokens by persisting the application binding public key Id in a storage that additionally links the application binding channel with any applicative level authentication/authorization tokens.

9. A system (100, 200) for verifying the authenticity of communication between a mobile client (102) and a server (106), comprising:
one or more processors and memory operatively coupled to the one or more processors, wherein the memory includes computer instructions which when executed by the one or more processors causes the one or more processors to perform the operations of:
creating (802) a self-signed application binding certificate including a challenge from the server, application measurements, and device environment measurements;
establishing (804) a secure channel to communicate the application binding certificate with an application binding service (302);
validating (806) the application binding certificate by the application binding service for the challenge, the application measurements, and the device environment measurement to register a public key at the server;
setting (807) a validity and expiration for the application binding service for application binding keys that limits the re-usage of the same application binding (public) key to validate request from the client after its expiration;
sending (808) validation of the binding to the client, where the client performs a renewal of the application binding once the application binding validity expires;
after successful binding, signing (810) all sensitive requests at an HTTP level by the App Binding private key that is verified by the App Binding Service ensuring the request's origin from a rightful mobile application; and
returning (812) a verification status and App Binding Public Key Id by the Application Binding Service to a Backend Service (312).

10. The system of claim 9, wherein the system further requires renewal of the application biding keys after expiration.

11. A method (400, 800) for verifying the authenticity of communication between a mobile client (102) and a server (106) in a computing environment having one or more processors and memory operatively coupled to the one or more processors, wherein the memory includes computer instructions which when executed by the one or more processors causes the one or more processors to perform the operations of:
creating (802) a self-signed application binding certificate (104);
establishing (804) a secure channel to communicate the application binding certificate with an application binding service (302);
validating (806) the application binding certificate by the application binding service to register a public key at the server;
setting (807) a validity and expiration for the application binding service;
sending (808) validation of the binding to the client, where the client performs a renewal of the application binding once the application binding validity expires;
after successful binding, signing (810) all sensitive requests at an HTTP level by the application binding private key that is verified by the application binding service ensuring the request's origin from a rightful mobile application; and
returning (812) a verification status and application binding public key Id by the application binding service to a Backend Service (312).

12. The method of claim 11, wherein the method validates the application binding service for the challenge, the application measurements, and the device environment measurement to register the public key at the server.

13. The method of claim 11, wherein the method sets the validity and expiration for the application binding service for application binding keys that limits the re-usage of the same application binding public key to validate request from the client after its expiration.

14. The method of claim 11, wherein the method further associates (814) any access tokens by the Backend Service with the application binding public key Id.

15. The method of claim 14, wherein the method associates any access tokens by having an additional field containing a public key id in the access tokens or by persisting the application binding public key Id in a storage that additionally links the application binding channel with any applicative level authentication/authorization tokens.
